# EUROPEAN PATENT APPLICATION

(11) **EP 4 491 418 A1**
(43) Date of publication of application: **15.01.2025**
(21) Application number: 24185904.0
(22) Date of filing: 02.07.2024
(51) Int. Cl.: B60C 19/00, B60C 5/14, G06K 19/077, H01Q 1/22, B60C 9/02, B60C 15/06

(54) **PNEUMATIC TIRE**

(30) Priority: 13.07.2023 JP 2023115281
(71) Applicant: Sumitomo Rubber Industries, Ltd., Kobe-shi, Hyogo 651-0072 (JP)
(72) Inventor: OKAGAWA, Hiroshi, Kobe-shi, 651-0072 (JP); KIMOTO, Ryuhei, Kobe-shi, 651-0072 (JP); MAEDA, Yohei, Kobe-shi, 651-0072 (JP)
(74) Representative: Manitz Finsterwald Patent- und Rechtsanwaltspartnerschaft mbB

(57) **Abstract**

A pneumatic tire of the present invention includes a tread portion 2, a pair of sidewall portions 3, a pair of bead portions 4, a toroidal carcass 6, an inner liner layer 10, and an electronic component 21. The carcass 6 includes a plurality of carcass cords 15 and a carcass ply 6A. The inner liner layer 10 includes a butyl-based rubber layer 11 and an insulation rubber layer 12. The butyl-based rubber layer 11 is placed so as to form a tire inner cavity surface. The insulation rubber layer 12 is locally placed with a smaller radial length than the butyl-based rubber layer 11. The electronic component 21 is placed between the butyl-based rubber layer 11 and the insulation rubber layer 12 so as not to be in contact with a topping rubber layer 16.

## Description

### BACKGROUND OF THE INVENTION

### Field of the Invention

The present invention relates to a pneumatic tire.

### Background Art

Hitherto, a tire in which, in order to reduce tire weight, an inner liner is joined to a carcass without using a tie gum layer, has been proposed (see, for example, Japanese Laid-Open Patent Publication No. 2021-147024).

In the above-described tire, when an electronic component such as an RFID tag is embedded between the inner liner and the carcass, the electronic component may come into contact with carcass cords, which may cause fatigue fracture in the carcass cords as the tire runs.

The present invention has been made in view of the above circumstances, and a main object of the present invention is to suppress damage to carcass cords at a portion where an electronic component is placed in a tire in which the electronic component is placed, while achieving weight reduction.

### SUMMARY OF THE INVENTION

The present invention is directed to a pneumatic tire including: a tread portion; a pair of sidewall portions; a pair of bead portions in each of which a bead core is embedded; a toroidal carcass extending on and between the bead cores in the pair of bead portions; a toroidal inner liner layer extending between the pair of bead portions on an inner side of the carcass; and at least one electronic component placed between the carcass and the inner liner layer, wherein the carcass includes a carcass ply including a plurality of carcass cords and a topping rubber layer covering the plurality of carcass cords, the inner liner layer includes a butyl-based rubber layer and an insulation rubber layer made of a rubber having a higher adhesive force to the topping rubber layer than the butyl-based rubber layer, the butyl-based rubber layer is placed so as to form a tire inner cavity surface, the insulation rubber layer is placed between the butyl-based rubber layer and the topping rubber layer and is locally placed with a smaller radial length than the butyl-based rubber layer, and the electronic component is placed between the butyl-based rubber layer and the insulation rubber layer so as not to be in contact with the topping rubber layer.

As a result of adopting the above-described configuration, the pneumatic tire of the present invention can suppress damage to the carcass cords at a portion where the electronic component is placed, while achieving weight reduction.

### BRIEF DESCRIPTION OF THE DRAWINGS

FIG. 1 is a transverse cross-sectional view of a pneumatic tire of one embodiment of the present invention;
FIG. 2 is an enlarged cross-sectional view of a carcass ply and an inner liner layer in FIG. 1;
FIG. 3 is an enlarged view of a bead portion in FIG. 1;
FIG. 4 is an enlarged perspective view of an electronic module in FIG. 3;
FIG. 5 is an enlarged cross-sectional view of a carcass, the inner liner layer, and the electronic module in FIG. 3;
FIG. 6 is a transverse cross-sectional view of a pneumatic tire of another embodiment of the present invention;
FIG. 7 is a transverse cross-sectional view of a pneumatic tire of still another embodiment of the present invention;
FIG. 8 is a transverse cross-sectional view of a pneumatic tire of still another embodiment of the present invention;
FIG. 9 is a transverse cross-sectional view of a pneumatic tire of Comparative Example 1; and
FIG. 10 is a transverse cross-sectional view of a pneumatic tire of Comparative Example 2.

### DETAILED DESCRIPTION

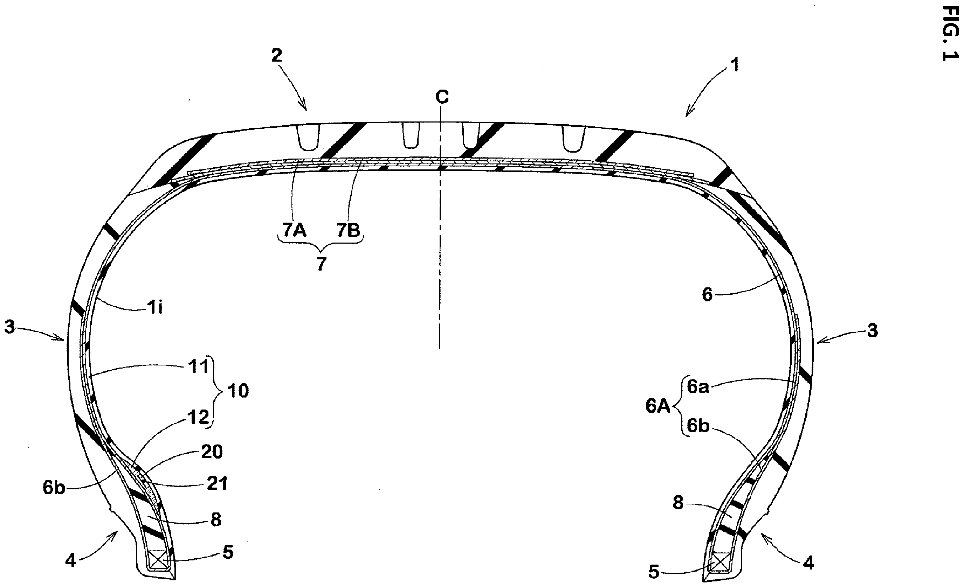

Hereinafter, some embodiments of the present invention will be described with reference to the drawings. The drawings are depicted so as to include the features of the present invention, but may contain exaggerated expressions and expressions that differ from the dimensional ratio of the actual structure in order to help the understanding of the present invention. In addition, the same or common elements are denoted by the same reference characters throughout each embodiment, and the redundant description thereof is omitted. FIG. 1 is a cross-sectional view showing a transverse cross-section of a pneumatic tire 1 (hereinafter sometimes referred to simply as "tire") of an embodiment in a standardized state. FIG. 1 shows a cross-section of the tire 1 when the tire 1 extending in an annular shape is cut along a virtual plane passing through the tire rotation axis and orthogonal to the tire circumferential direction. The tire 1 of the present embodiment is suitably used, for example, for passenger cars.

In the case of a pneumatic tire for which various standards are defined, the standardized state is a state where the tire is fitted on a standardized rim and inflated to a standardized internal pressure and no load is applied to the tire. In the case of a tire for which various standards are not defined, the standardized state means a standard use state, corresponding to the purpose of use of the tire, where no load is applied to the tire. In the present specification, unless otherwise specified, dimensions and the like of components of the tire are values measured in the standardized state. In addition, dimensions of components (e.g., an inner member of the tire 1) that cannot be measured in the standardized state are values measured in a state where the tire 1 is made to approximate the standardized state as much as possible.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, the tire 1 of the present embodiment includes a tread portion 2, a pair of sidewall portions 3, and a pair of bead portions 4. A bead core 5 is embedded in each bead portion 4. The tire 1 also includes a carcass 6, an inner liner layer 10, and at least one electronic component 21.

The carcass 6 extends toroidally on and between the bead cores 5 in the pair of bead portions 4. The carcass 6 of the present embodiment is composed of, for example, one carcass ply 6A. The carcass ply 6A includes, for example, a body portion 6a and turned-up portions 6b. The body portion 6a extends, for example, between the two bead portions 4. Accordingly, the body portion 6a extends at least from the tread portion 2 through the sidewall portions 3 to the bead cores 5 in the bead portions 4. Each turned-up portion 6b, for example, is connected to the body portion 6a and turned up from the inner side to the outer side in the tire axial direction around the bead core 5. A bead apex 8 is placed between the body portion 6a and each turned-up portion 6b so as to extend outward in the tire radial direction from the bead core 5 to reinforce the bead portion 4 as appropriate.

The inner liner layer 10 extends toroidally between the pair of bead portions 4 on the inner side of the carcass 6.

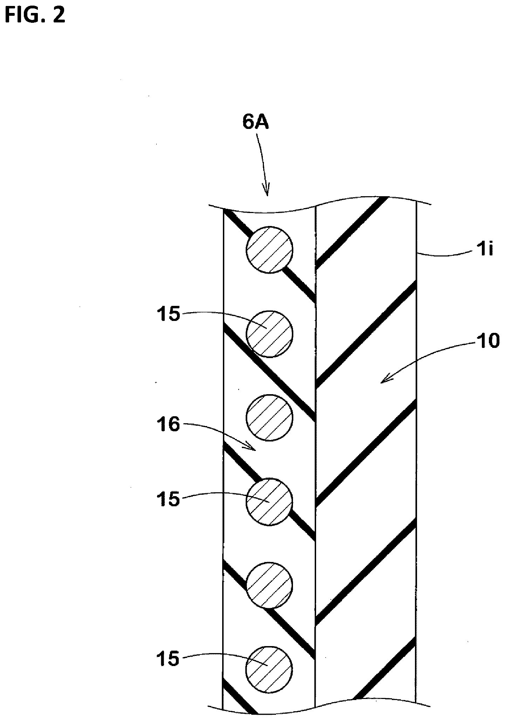

FIG. 2 shows an enlarged cross-sectional view of the carcass ply 6A and the inner liner layer 10. FIG. 2 is a cross-sectional view of the carcass ply 6A and the inner liner layer 10 at a position avoiding the electronic component 21. In FIG. 2, the rubber members on the tire outer surface side with respect to the carcass ply 6A are omitted. As shown in FIG. 2, the carcass ply 6A includes a plurality of carcass cords 15 and a topping rubber layer 16 covering the plurality of carcass cords 15.

As each carcass cord 15, for example, an organic fiber cord made of aramid, rayon, or the like is used. The carcass cords 15 are preferably arranged at an angle of 70 to 90° with respect to a tire equator C, for example.

Examples of the rubber component of the topping rubber layer 16 of the carcass 6 include isoprene-based rubbers, and diene-based rubbers such as styrene-butadiene rubber (SBR), butadiene rubber (BR), acrylonitrile butadiene rubber (NBR), chloroprene rubber (CR), isobutylene-isoprene-rubber (IIR), and styrene-isoprene-butadiene copolymer rubber (SIBR). These rubbers may be used individually, or two or more of these rubbers may be used in combination. Among them, isoprene-based rubbers, SBR, and BR are preferable.

The configuration of the above-described carcass ply 6A is an example, and a known configuration can be applied to the carcass 6 in the present invention. In addition, as shown in FIG. 1, in the tread portion 2 of the tire 1 of the present embodiment, a belt layer 7 including metallic belt cords is provided outward of the carcass 6 in the tire radial direction. The belt layer 7 includes, for example, two belt plies 7A and 7B. In each of the two belt plies 7A and 7B, a plurality of belt cords are arranged at an angle of 15 to 45° with respect to the tire circumferential direction. The belt cords of the belt ply 7A and the belt cords of the other belt ply 7B are inclined in directions opposite to each other with respect to the tire circumferential direction. Accordingly, the tread portion 2 is effectively reinforced.

The electronic component 21 is placed between the carcass 6 and the inner liner layer 10. In the present embodiment, one electronic component 21 is placed in one of the pair of bead portions 4 (on the left side in FIG. 1). However, the present invention is not limited to such a mode, and the electronic component 21 may be provided, for example, in the sidewall portion 3 or the tread portion 2.

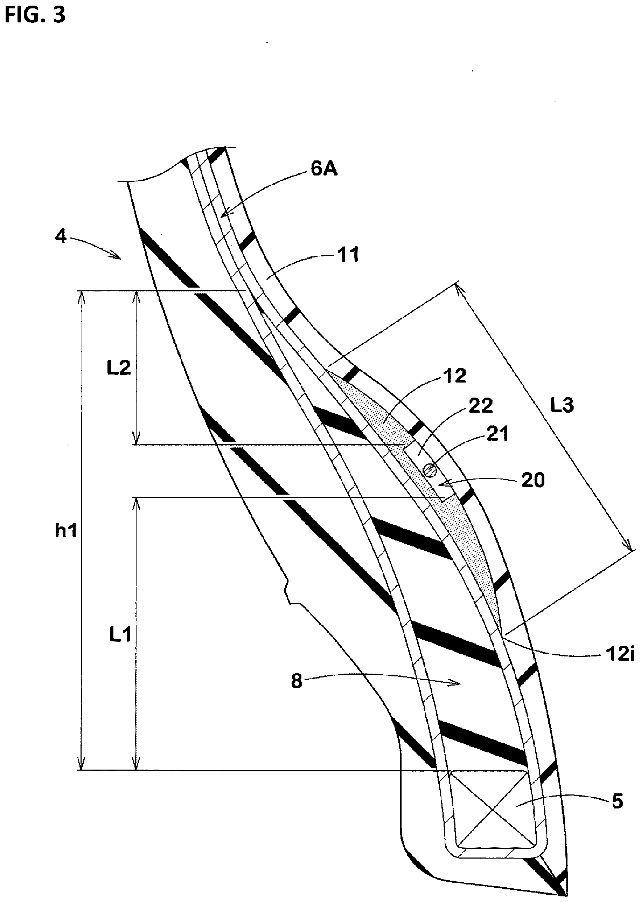

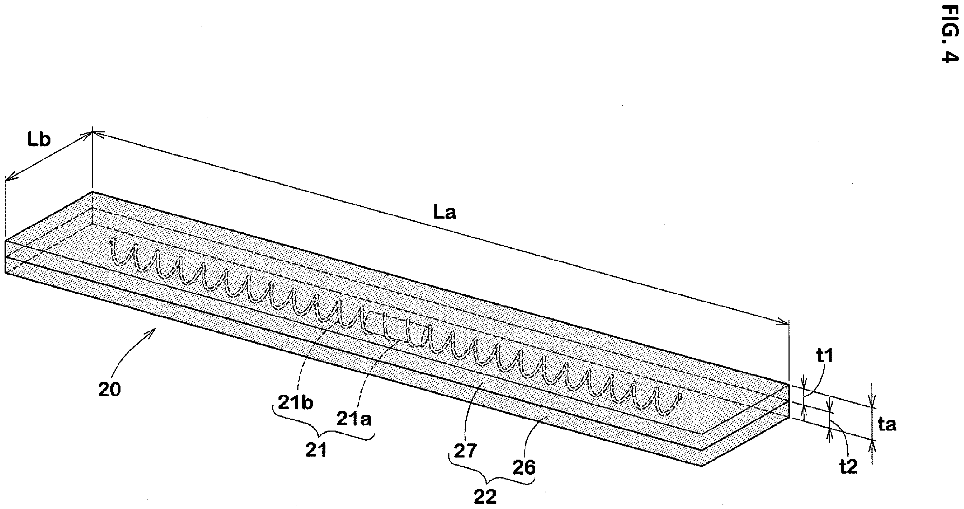

FIG. 3 shows an enlarged cross-sectional view of the bead portion 4 in which the electronic component 21 is placed. FIG. 4 shows an enlarged perspective view of an electronic module 20 including the electronic component 21. The outer surface of the electronic module 20 in FIG. 4 is dotted. As shown in FIG. 3 and FIG. 4, the electronic component 21 is covered with a cover rubber 22. Hereinafter, in the present specification, a member composed of the electronic component 21 and the cover rubber 22 is referred to as electronic module 20. In another embodiment, the electronic component 21 may be placed directly between the carcass 6 and the inner liner layer 10.

Examples of the electronic component 21 include RFID tags, pressure sensors, temperature sensors, acceleration sensors, and magnetic sensors. The electronic component 21 of the present embodiment is an RFID tag. As shown in FIG. 4, the RFID tag is a small and lightweight electronic component that includes: a metallic body portion 21a including an IC chip that includes a transmitter/receiver circuit, a control circuit, a memory, etc.; and an antenna 21b. Upon receiving interrogation radio waves, the RFID tag uses the radio waves as electrical energy and transmits various data in the memory as response radio waves. A known configuration is employed for the RFID tag, and the detailed description thereof is omitted in the present specification.

For the cover rubber 22, a known rubber having excellent adhesiveness is employed as appropriate. For the cover rubber 22, the same rubber as the topping rubber layer 16 (shown in FIG. 2) of the above-described carcass ply 6A may be employed.

As shown in FIG. 1, the inner liner layer 10 includes a butyl-based rubber layer 11 and an insulation rubber layer 12. In each drawing of the present specification, the insulation rubber layer 12 is dotted. The butyl-based rubber layer 11 is placed so as to form a tire inner cavity surface 1i side. The butyl-based rubber layer 11 has a very low air permeability and can maintain the tire internal pressure. The butyl-based rubber layer 11 contains, for example, 80% or more of an isobutylene-isoprene-rubber or a halogenated isobutylene-isoprene-rubber.

The insulation rubber layer 12 is made of a rubber having a higher adhesive force to the topping rubber layer 16 (shown in FIG. 2) of the carcass ply 6A than the butyl-based rubber layer 11. The insulation rubber layer 12 is preferably made of, for example, an elastomer composition containing a natural rubber or styrene butadiene rubber. In addition, the insulation rubber layer 12 is placed between the butyl-based rubber layer 11 and the topping rubber layer 16 of the carcass ply 6A. The insulation rubber layer 12 is locally placed with a smaller radial length than the butyl-based rubber layer 11. Here, "locally" means that the insulation rubber layer 12 is not placed over the entire range of the tire inner cavity surface 1i. Therefore, in the present invention, as in the embodiment shown in FIG. 1, the insulation rubber layer 12 may be placed partially in the bead portion 4, or the insulation rubber layer 12 may be placed over the bead portion 4 and the sidewall portion 3 as described later.

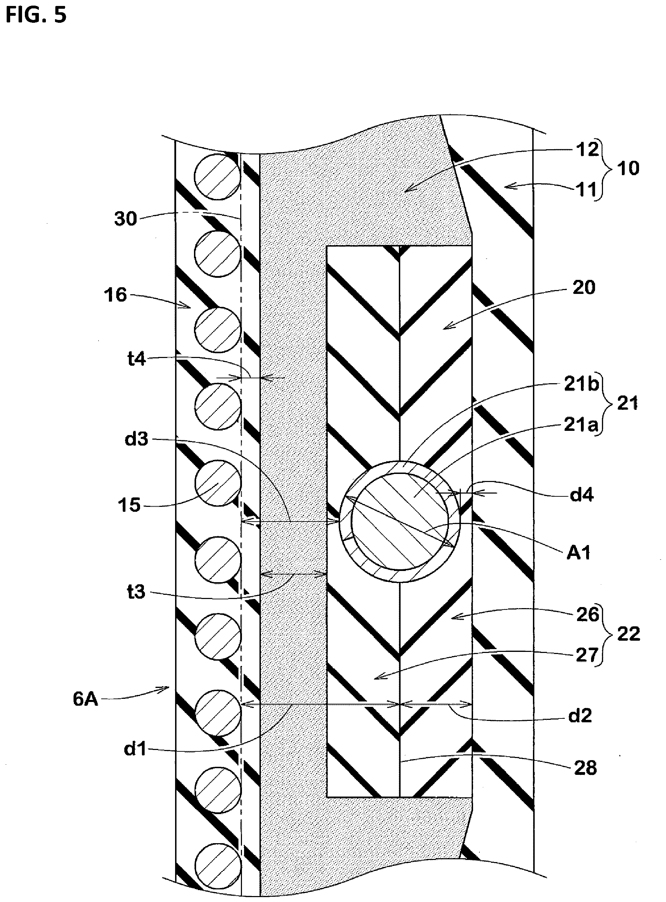

FIG. 5 shows an enlarged cross-sectional view of the carcass ply 6A, the inner liner layer 10, and the electronic component 21. In FIG. 5, for ease of understanding the invention, each layer has a constant thickness, and the carcass cords 15 are arranged at equal intervals, but the actual tire 1 can include deformation and strain that are inevitable in rubber products. As shown in FIG. 5, the electronic component 21 is placed between the butyl-based rubber layer 11 and the insulation rubber layer 12 so as not to be in contact with the topping rubber layer 16. Accordingly, the tire 1 of the present invention can suppress damage to the carcass cords 15 at the portion where the electronic component 21 is placed, while achieving weight reduction. The reason for this is as follows.

In the present invention, since the insulation rubber layer 12 for increasing the adhesive force between the butyl-based rubber layer 11 and the carcass ply 6A is locally placed, the volume of the inner liner layer 10 can be made smaller than in a conventional tire (tire in which a tie gum layer for adhering a butyl-based rubber layer extends toroidally over the entire tire), thereby achieving weight reduction.

Since the electronic component 21 of the present invention is placed between the butyl-based rubber layer 11 and the insulation rubber layer 12 so as not to be in contact with the topping rubber layer 16, even if the region (in the present embodiment, the bead portion 4) where the electronic component 21 is placed is repeatedly deformed due to use of the tire 1, it is difficult for the electronic component 21 and the carcass cords 15 to come into contact with each other, so that damage to the carcass cords 15 at the portion where the electronic component 21 is placed can be suppressed.

Hereinafter, more detailed configurations of the present embodiment will be described. The configurations described below show a specific mode of the present embodiment. Therefore, it is needless to say that the present invention can achieve the above-described effect even when the configurations described below are not provided. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to each configuration can be expected.

As shown in FIG. 1, the electronic module 20 including the electronic component 21 is preferably located so as to be spaced apart from the outer surface in the tire radial direction of the bead core 5 outward in the tire radial direction by a distance of 3 mm or more. In addition, the electronic module 20 is preferably located so as to be spaced apart from the outer end in the tire axial direction of the belt layer 7 inward in the tire radial direction by a distance of 3 mm or more. Accordingly, the electronic module 20 is placed so as to be separated from the metal members included in the bead core 5 and the belt layer 7, so that operational failure such as radio interference of the electronic module 20 can be suppressed. The distance is specified as the distance in a direction parallel to the tire radial direction from the outer surface of the bead core 5 or the outer end of the belt layer 7 to the center of gravity of the electronic component 21 (shown in FIG. 4) included in the electronic module 20.

As shown in FIG. 3, the electronic module 20 is preferably placed in the bead portion 4, and in the present embodiment, the electronic module 20 is placed inward of the bead apex 8 in the tire axial direction. Accordingly, deformation around the electronic module 20 is suppressed by the bead apex 8, so that the durability of the tire 1 is further improved.

From the viewpoint of obtaining the above-described effects while ensuring a sufficient distance between the electronic component 21 and the bead core 5, a distance L1 in the tire radial direction from the inner end in the tire radial direction of the electronic module 20 to the outer surface of the bead core 5 is preferably 50% to 60% of a height h1 in the tire radial direction of the bead apex 8. In addition, a distance L2 from the outer end in the tire radial direction of the electronic module 20 to the outer end in the tire radial direction of the bead apex 8 is preferably 25% to 35% of the height h1 of the bead apex 8.

More specifically, when the height h1 of the bead apex 8 is not less than 35 mm, it is preferable that the distance L1 is not less than 5 mm and the distance L2 is not less than 7 mm. On the other hand, when the height h1 of the bead apex 8 is less than 35 mm, it may be difficult to ensure that both the distance L1 and the distance L2 are sufficient. Therefore, when the height h1 is less than 35 mm, the distance L1 may be preferentially ensured as 5 mm or more, and the distance L2 may be less than 7 mm.

As shown in FIG. 4, in the electronic component 21 of the present embodiment, the antenna 21b extends helically around the body portion 21a. Such an electronic component 21 can exhibit excellent durability since the body portion 21a is protected by the antenna 21b. A helix outer diameter A1 (shown in FIG. 5) of the antenna 21b is, for example, 1.5 to 2.5 mm and preferably 1.8 to 2.0 mm. The total length (which is the total length including the antenna 21b) of the electronic component 21 is, for example, about 35 to 50 mm.

Meanwhile, the cover rubber 22 has a total length larger than the total length of the electronic component 21 such that the cover rubber 22 can fully cover the electronic component 21. Specifically, the cover rubber 22 is formed in a laterally elongated and flattened rectangular parallelepiped shape having a first length La, a second length Lb, and a thickness ta. The first length La is a length in the tire circumferential direction, and is, for example, 45 to 70 mm. The second length Lb is a length in a direction orthogonal to the first length La, and corresponds to a length, along the carcass ply 6A, of the electronic module 20 in the tire transverse cross-section. The second length Lb is smaller than the first length La, and is, for example, 8 to 15 mm. The thickness ta is a thickness in a direction orthogonal to the first length La and the second length Lb. The thickness ta is smaller than the first length La and the second length Lb, and is, for example, 2.0 to 3.0 mm and preferably 2.2 to 2.4 mm. In the present specification, unless otherwise specified, the thickness of each portion means the average thickness of each portion. As the "average thickness of each portion", for example, a value obtained by dividing the sum of the thicknesses of a plurality of micro regions, into which the target portion is equally divided, by the number of the micro regions, is adopted.

The cover rubber 22 of the present embodiment includes an inner layer 26 which is in contact with the butyl-based rubber layer 11 (shown in FIG. 5) and an outer layer 27 which is in contact with the insulation rubber layer 12 (shown in FIG. 5). In addition, in the present embodiment, the electronic component 21 is placed between the inner layer 26 and the outer layer 27 of the cover rubber 22. A thickness t1 of the outer layer 27 and a thickness t2 of the inner layer 26 are each preferably 0.8 to 1.5 mm and more preferably 1.0 to 1.3 mm. Accordingly, durability is further improved.

As shown in FIG. 5, the cover rubber 22 has a boundary surface 28 between the inner layer 26 and the outer layer 27. The electronic module 20 of the present embodiment is placed such that a first distance d1 which is the shortest distance from the boundary surface 28 to a virtual carcass cord reference surface 30 is ensured. The virtual carcass cord reference surface 30 means a virtual surface connecting the surfaces of the plurality of carcass cords 15, and specifically, the virtual carcass cord reference surface 30 is a flat or smooth curved surface passing through the end on the tire inner cavity surface 1i side of each carcass cord 15. In FIG. 5, the virtual carcass cord reference surface 30 is shown by an alternate long and two short dashes line.

The electronic module 20 of the present embodiment is also placed such that a second distance d2 which is the shortest distance from the boundary surface 28 to the butyl-based rubber layer 11 is ensured. The first distance d1 is, for example, 2.0 to 3.0 mm. The second distance d2 is, for example, 1.0 to 1.3 mm. If the second distance d2 is large, accumulation of air may occur around the electronic module 20, which may impair durability. From such a viewpoint, in a preferable mode, the ratio d1/d2 of the first distance d1 to the second distance d2 is 1.8 to 2.2. Accordingly, peeling at the boundary surface 28 is suppressed.

A thickness t3 of the insulation rubber layer 12 is, for example, 0.2 to 1.5 mm and preferably 0.4 to 1.1 mm. Accordingly, the electronic component 21 can be reliably inhibited from coming into contact with the carcass cords 15.

If a shortest distance d3 from the carcass cord 15 to the electronic component 21 is small, the electronic component 21 and the carcass cord 15 are more likely to come into contact with each other. On the other hand, if the shortest distance d3 is large, the weight of the tire 1 may increase or the uniformity of the tire 1 may deteriorate. Therefore, the shortest distance d3 is preferably not less than 0.5 mm and more preferably not less than 0.7 mm, and is preferably not greater than 1.8 mm and more preferably not greater than 1.6 mm.

A shortest distance d4 from the butyl-based rubber layer 11 to the electronic component 21 is, for example, 0.1 to 0.4 mm. Accordingly, the electronic component 21 can be inhibited from coming into contact with the butyl-based rubber layer 11.

As shown in FIG. 1, in the present embodiment, the insulation rubber layer 12 is placed in only one of the pair of bead portions 4, and is not placed in the other portions. However, as described later, the insulation rubber layer 12 may be placed in another region. From the viewpoint of reducing the weight of the tire 1, the total radial length of the insulation rubber layer 12 is preferably not greater than 50% and more preferably not greater than 30% of the total radial length of the tire inner cavity surface 1i. In addition, from the viewpoint of suppressing peeling damage to the butyl-based rubber layer 11, the total radial length of the insulation rubber layer 12 is preferably not less than 5% of the total radial length of the tire inner cavity surface 1i.

As shown in FIG. 3, an inner end 12i in the tire radial direction of the insulation rubber layer 12 is located at a position away from the outer surface in the tire radial direction of the bead core 5 by 5 mm or more. In the tire transverse cross-section, a radial length L3 of the insulation rubber layer 12 is preferably larger than the radial length of the cover rubber 22 (corresponding to the second length Lb shown in FIG. 4) by 5 mm or more. Specifically, the length L3 of the insulation rubber layer 12 is preferably 4.0 to 6.0 times the length of the cover rubber 22. Accordingly, the durability of the tire 1 is reliably improved.

From the viewpoint of reliably suppressing peel damage to and fatigue fracture of the butyl-based rubber layer 11, a loss tangent tanδ of the insulation rubber layer 12 is preferably not greater than 0.16. The loss tangent tanδ is measured under the following conditions using a viscoelasticity spectrometer in accordance with the standards of JIS-K6394.
Initial strain: 10%
Amplitude: ±2%
Frequency: 10 Hz
Deformation mode: tension
Measurement temperature: 30°C

From the same viewpoint, a complex elastic modulus E* of the insulation rubber layer 12 is preferably not less than 4.0 MPa. The complex elastic modulus E* is a value measured using a viscoelasticity spectrometer under the following conditions in accordance with the standards of JIS-K6394.
Initial strain: 10%
Amplitude: ±2%
Frequency: 10 Hz
Deformation mode: tension
Measurement temperature: 30°C

As shown in FIG. 5, a thickness t4 of the topping rubber layer 16 (which is the maximum thickness from the virtual carcass cord reference surface 30 to the outer surface of the carcass ply 6A in a region in contact with the outer layer 27) is, for example, smaller than the thickness t1 (shown in FIG. 4) of the outer layer 27 and smaller than the thickness t3 of the insulation rubber layer 12. Specifically, the thickness t4 of the topping rubber layer 16 is 0.10 to 0.30 mm. Accordingly, the thickness of the carcass 6 can be decreased while durability is ensured, thereby reducing the tire weight.

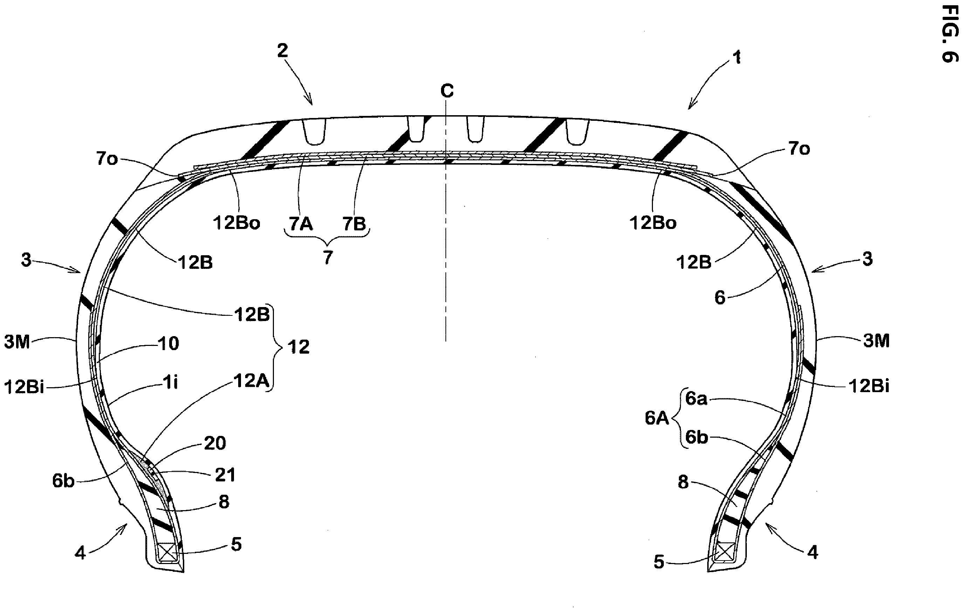

FIG. 6 shows a transverse cross-sectional view of a tire 1 of another embodiment of the present invention. As shown in FIG. 6, in this embodiment, the insulation rubber layer 12 includes a first insulation rubber layer 12A which is in contact with the electronic module 20 and at least one second insulation rubber layer 12B which is not in contact with the electronic module 20. In this embodiment, the second insulation rubber layer 12B is provided in each of the pair of sidewall portions 3. Accordingly, peeling damage to the inner liner layer 10 is further suppressed.

In a preferable mode, an outer end 12Bo in the tire radial direction of each second insulation rubber layer 12B is preferably located on the tire equator C side so as to be spaced apart from an outer end 7o in the tire axial direction of the belt layer 7 by a distance of 10 mm or more. In addition, an inner end 12Bi in the tire radial direction of each second insulation rubber layer 12B is preferably located on the bead core 5 side so as to be spaced apart from a tire maximum width position 3M of the sidewall portion 3 by a distance of 5 mm or more. Accordingly, each second insulation rubber layer 12B is placed in a region where the tire 1 is easily deformed, so that the durability of the tire 1 is reliably improved.

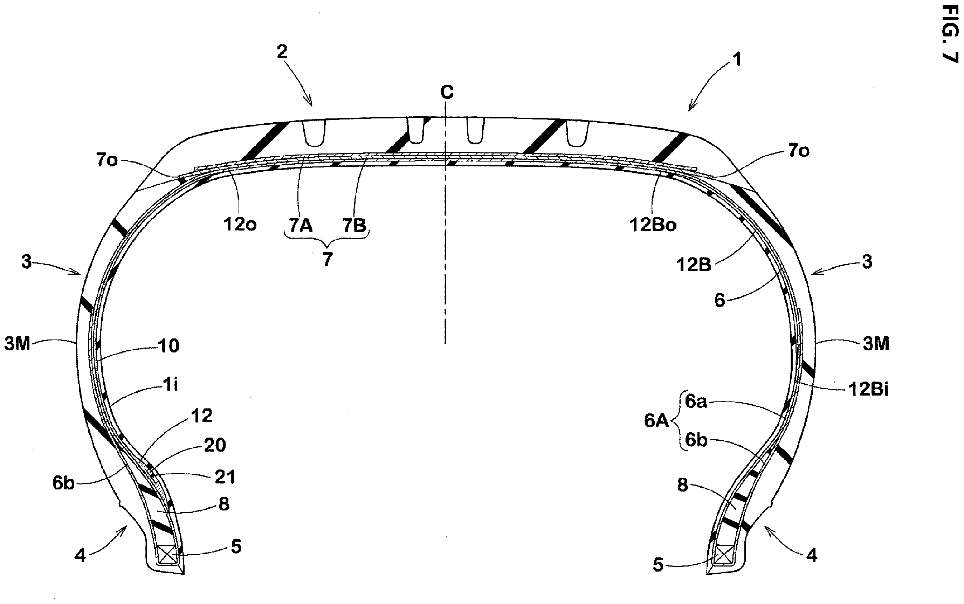

FIG. 7 shows a transverse cross-sectional view of a tire 1 of still another embodiment of the present invention. As shown in FIG. 7, in this embodiment, the electronic module 20 is placed in the bead portion 4, and the insulation rubber layer 12 which is in contact with the electronic module 20 extends to the sidewall portion 3. More specifically, an outer end 12o in the tire radial direction of the insulation rubber layer 12 is located on the tire equator C side with respect to the outer end 7o in the tire axial direction of the belt layer 7. Such an insulation rubber layer 12 can integrally reinforce the sidewall portion 3 and the bead portion 4, and can effectively suppress peeling damage to the butyl-based rubber layer 11.

In this embodiment, a second insulation rubber layer 12B similar to that of the embodiment shown in FIG. 6 is placed in the sidewall portion 3 on the side opposite to the side where the electronic module 20 is placed. Accordingly, reduction of the weight and improvement of the durability of the tire 1 can be expected. However, in still another modification of the embodiment shown in FIG. 7, as in the insulation rubber layer 12 in which the electronic module 20 is placed, the second insulation rubber layer 12B may be placed over the bead portion 4 and the sidewall portion 3.

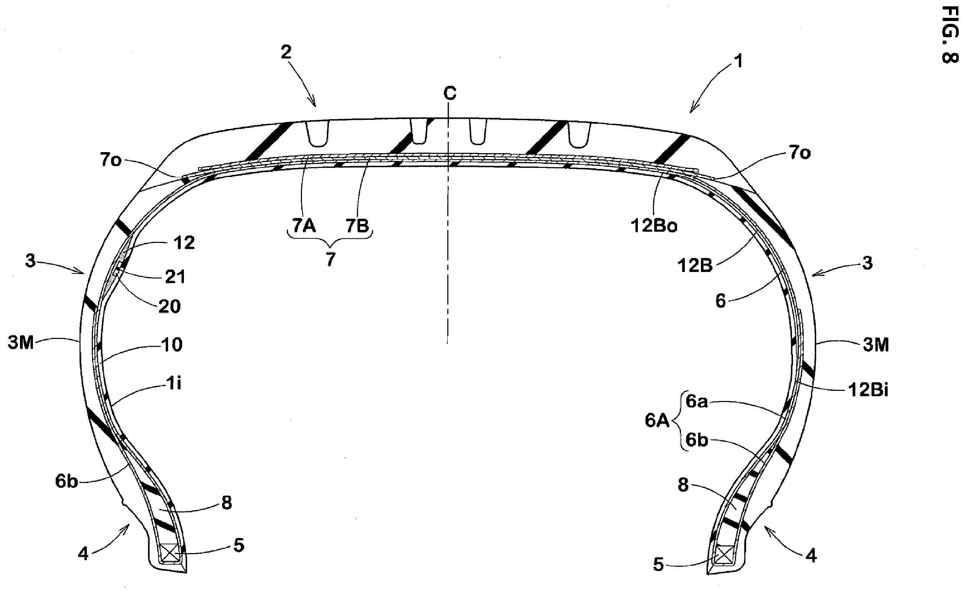

FIG. 8 shows a transverse cross-sectional view of a tire 1 of still another embodiment of the present invention. As shown in FIG. 8, in this embodiment, the electronic component 21 and the insulation rubber layer 12 are provided in the sidewall portion 3. The second insulation rubber layer 12B of the embodiment shown in FIG. 6 is provided in the sidewall portion 3 on the side opposite to the insulation rubber layer 12. In this embodiment, since the electronic component 21 is placed in the sidewall portion 3, the impact generated when the tire 1 is fitted onto a rim is less likely to be transmitted to the electronic component 21, which serves to suppress damage to the electronic component 21 when the tire 1 is fitted onto the rim.

In this embodiment, the electronic component 21 is provided between the outer end 7o of the belt layer 7 and the tire maximum width position 3M. The electronic component 21 may be provided, for example, at a position where the electronic module 20 overlaps the tire maximum width position 3M (not shown).

Although some embodiments of the present invention have been described in detail above, the present invention is not limited to the above specific embodiments, and various modifications can be made to implement the present invention.

### EXAMPLES

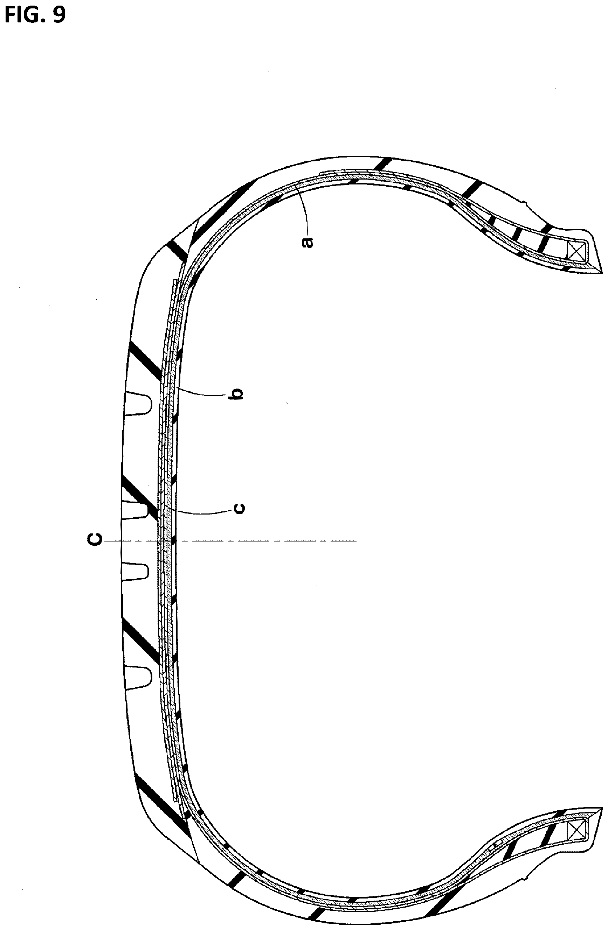

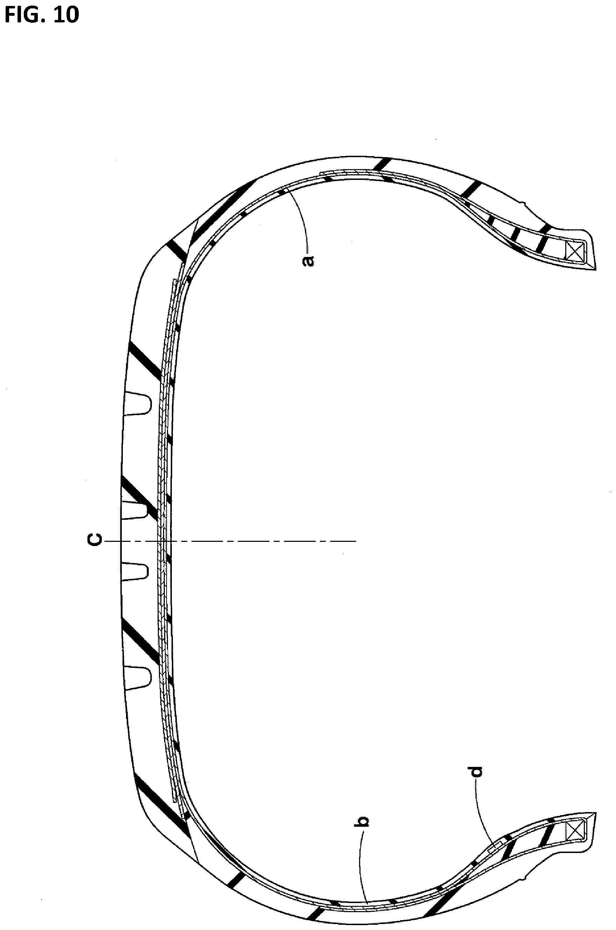

Pneumatic tires for a passenger car with a size of 285/65R17 having the basic structure shown in FIG. 1 were produced as test tires on the basis of specifications in Table 1. As Comparative Example 1, a tire having a transverse cross-section shown in FIG. 9 was produced as a test tire. In addition, as Comparative Example 2, a tire having a transverse cross-section shown in FIG. 10 was produced as a test tire. As shown in FIG. 9, in Comparative Example 1, a tie gum layer c is placed so as to completely separate a carcass ply a and a butyl-based rubber layer b, and an electronic module d is placed between the carcass ply a and the tie gum layer c. As shown in FIG. 10, in Comparative Example 2, no tie gum layer and no insulation rubber layer are placed between a carcass ply a and a butyl-based rubber layer b, and an electronic module d is placed between the carcass ply a and the butyl-based rubber layer b. Comparative Examples 1 and 2 are substantially the same as the tire of each Example, except for the matters described above. For each test tire, the tire weight was measured, and the tire durability was tested. The common specifications and test methods for the tires are as follows.
Rim: 17×8.0
Tire internal pressure: 250 kPa

### <Tire Weight>

The weight of each tire not including the rim was measured. The results are shown as an index with the reciprocal of the tire weight of Comparative Example 1 being regarded as 100. A higher value indicates that the tire weight is smaller.

### <Tire Durability>

Each test tire was caused to run at 120 km/h on a drum tester with a constant vertical load (7.33 kN) being applied thereto, and the running distance was measured until damage occurred at the portion where the electronic module was placed. The results are shown as an index with the running distance of Comparative Example 1 being regarded as 100. A higher value indicates that the durability of the tire is higher.

The test results are shown in Table 1.

**[Table 1]**

| | Comp. Ex. 1 | Comp. Ex. 2 | Ex. 1 | Ex. 2 | Ex. 3 | Ex. 4 | Ex. 5 | Ex. 6 |
|---|---|---|---|---|---|---|---|---|
| Drawing showing transverse cross-section of tire | FIG. 9 | FIG. 10 | FIG. 1 | FIG. 1 | FIG. 1 | FIG. 1 | FIG. 1 | FIG. 1 |
| Shortest distance d3 from carcass cord to electronic component (mm) | 1.1 | 0.45 | 1.1 | 0.5 | 0.7 | 1.6 | 1.8 | 2.0 |
| Tire weight (index) | 100 | 110 | 108 | 108 | 108 | 107 | 106 | 106 |
| Tire durability (index) | 100 | 50 | 100 | 60 | 100 | 120 | 120 | 120 |

As shown in Table 1, the tire weight is large in Comparative Example 1 in which the tie gum layer is placed so as to completely separate the carcass ply and the butyl-based rubber layer. In addition, the tire durability is significantly decreased by 50 points in Comparative Example 2 in which no tie gum layer and no insulation rubber layer are placed between the carcass ply and the butyl-based rubber layer.

In contrast, in Examples 1 to 6, whereas the tire weight is smaller than in Comparative Example 1, the tire durability is maintained at 60 to 120 points, which is better than in Comparative Example 2. That is, it is confirmed that, in the present invention, the durability of the tire in which the electronic module is placed is improved at the portion where the electronic module is placed, while achieving weight reduction.

### [Additional Note]

The present invention includes the following aspects.

### [Present Invention 1]

A pneumatic tire including:
a tread portion;
a pair of sidewall portions;
a pair of bead portions in each of which a bead core is embedded;
a toroidal carcass extending on and between the bead cores in the pair of bead portions;
a toroidal inner liner layer extending between the pair of bead portions on an inner side of the carcass; and
at least one electronic component placed between the carcass and the inner liner layer, wherein
the carcass includes a carcass ply including a plurality of carcass cords and a topping rubber layer covering the plurality of carcass cords,
the inner liner layer includes a butyl-based rubber layer and an insulation rubber layer made of a rubber having a higher adhesive force to the topping rubber layer than the butyl-based rubber layer,
the butyl-based rubber layer is placed so as to form a tire inner cavity surface,
the insulation rubber layer is placed between the butyl-based rubber layer and the topping rubber layer and is locally placed with a smaller radial length than the butyl-based rubber layer, and
the electronic component is placed between the butyl-based rubber layer and the insulation rubber layer so as not to be in contact with the topping rubber layer.

### [Present Invention 2]

The pneumatic tire according to Present Invention 1, wherein
the electronic component is covered with a cover rubber, and
a shortest distance from the carcass cord to the electronic component is 0.5 to 1.8 mm.

### [Present Invention 3]

The pneumatic tire according to Present Invention 2, wherein a shortest distance from the butyl-based rubber layer to the electronic component is 0.1 to 0.4 mm.

### [Present Invention 4]

The pneumatic tire according to any one of Present Inventions 1 to 3, wherein a loss tangent tanδ of the insulation rubber layer is not greater than 0.16.

### [Present Invention 5]

The pneumatic tire according to any one of Present Inventions 1 to 4, wherein a complex elastic modulus E* of the insulation rubber layer is not less than 4.0 MPa.

### [Present Invention 6]

The pneumatic tire according to any one of Present Inventions 1 to 5, wherein the electronic component includes a metallic body portion including an IC chip, and an antenna extending helically around the body portion.

### [Present Invention 7]

The pneumatic tire according to Present Invention 6, wherein a helix outer diameter of the antenna is 1.8 to 2.0 mm.

### [Present Invention 8]

The pneumatic tire according to any one of Present Inventions 1 to 7, further including an electronic module including a cover rubber covering the electronic component, wherein
the bead portions each include a bead apex extending outward in a tire radial direction from the bead core, and
a distance in the tire radial direction from an inner end in the tire radial direction of the electronic module to an outer surface of the bead core is 50% to 60% of a height in the tire radial direction of the bead apex.

### [Present Invention 9]

The pneumatic tire according to Present Invention 8, wherein a distance in the tire radial direction from an outer end in the tire radial direction of the electronic module to an outer end in the tire radial direction of the bead apex is 25% to 35% of the height of the bead apex.

### [Present Invention 10]

The pneumatic tire according to any one of Present Inventions 1 to 9, wherein
the carcass includes a plurality of carcass cords and a virtual carcass cord reference surface passing through ends on the tire inner cavity surface side of the plurality of carcass cords,
the pneumatic tire further includes the electronic module including a cover rubber covering the electronic component,
the cover rubber includes an inner layer which is in contact with the butyl-based rubber layer, an outer layer which is in contact with the insulation rubber layer, and a boundary surface between the inner layer and the outer layer, and
a ratio d1/d2 of a first distance d1, which is a shortest distance from the boundary surface to the virtual carcass cord reference surface, to a second distance d2, which is a shortest distance from the boundary surface to the butyl-based rubber layer, is 1.8 to 2.2.

## Claims

1. A pneumatic tire (1) comprising:
a tread portion (2);
a pair of sidewall portions (3);
a pair of bead portions (4) in each of which a bead core (5) is embedded;
a toroidal carcass (6) extending on and between the bead cores (5) in the pair of bead portions (4);
a toroidal inner liner layer (10) extending between the pair of bead portions (4) on an inner side of the carcass (6); and
at least one electronic component (21) placed between the carcass (6) and the inner liner layer (10), wherein
the carcass (6) includes a carcass ply (6A) including a plurality of carcass cords (15) and a topping rubber layer (16) covering the plurality of carcass cords (15),
the inner liner layer (10) includes a butyl-based rubber layer (11) and an insulation rubber layer (12) made of a rubber having a higher adhesive force to the topping rubber layer (16) than the butyl-based rubber layer (11),
the butyl-based rubber layer (11) is placed so as to form a tire inner cavity surface (1i),
the insulation rubber layer (12) is placed between the butyl-based rubber layer (11) and the topping rubber layer (16) and is locally placed with a smaller radial length than the butyl-based rubber layer (11), and
the electronic component (21) is placed between the butyl-based rubber layer (11) and the insulation rubber layer (12) so as not to be in contact with the topping rubber layer (16).

2. The pneumatic tire (1) according to claim 1, wherein
the electronic component (21) is covered with a cover rubber (22), and
a shortest distance (d3) from the carcass cord (15) to the electronic component (21) is 0.5 to 1.8 mm.

3. The pneumatic tire (1) according to claim 2, wherein a shortest distance (d4) from the butyl-based rubber layer (11) to the electronic component (21) is 0.1 to 0.4 mm.

4. The pneumatic tire (1) according to any one of claims 1 to 3, wherein a loss tangent tanδ of the insulation rubber layer (12) is not greater than 0.16.

5. The pneumatic tire (1) according to any one of claims 1 to 4, wherein a complex elastic modulus E* of the insulation rubber layer (12) is not less than 4.0 MPa.

6. The pneumatic tire (1) according to any one of claims 1 to 5, wherein the electronic component (21) includes a metallic body portion (21a) including an IC chip, and an antenna (21b) extending helically around the body portion (21a).

7. The pneumatic tire (1) according to claim 6, wherein a helix outer diameter (A1) of the antenna (21b) is 1.8 to 2.0 mm.

8. The pneumatic tire (1) according to any one of claims 1 to 7, further comprising an electronic module (20) including a cover rubber (22) covering the electronic component (21), wherein
the bead portions (4) each include a bead apex (8) extending outward in a tire radial direction from the bead core (5), and
a distance (L1) in the tire radial direction from an inner end in the tire radial direction of the electronic module (20) to an outer surface of the bead core (5) is 50% to 60% of a height (h1) in the tire radial direction of the bead apex (8).

9. The pneumatic tire (1) according to claim 8, wherein a distance (L2) in the tire radial direction from an outer end in the tire radial direction of the electronic module (20) to an outer end in the tire radial direction of the bead apex (8) is 25% to 35% of the height (h1) of the bead apex (8).

10. The pneumatic tire (1) according to any one of claims 1 to 9, wherein
the carcass (6) includes a plurality of carcass cords (15) and a virtual carcass cord reference surface (30) passing through ends on the tire inner cavity surface (1i) side of the plurality of carcass cords (15),
the pneumatic tire (1) further comprises the electronic module (20) including a cover rubber (22) covering the electronic component (21),
the cover rubber (22) includes an inner layer (26) which is in contact with the butyl-based rubber layer (11), an outer layer (27) which is in contact with the insulation rubber layer (12), and a boundary surface (28) between the inner layer (26) and the outer layer (27), and
a ratio d1/d2 of a first distance d1, which is a shortest distance from the boundary surface (28) to the virtual carcass cord reference surface (30), to a second distance d2, which is a shortest distance from the boundary surface (28) to the butyl-based rubber layer (11), is 1.8 to 2.2.
